# EUROPEAN PATENT SPECIFICATION

(11) **EP 2 743 217 B1**
(45) Date of publication and mention of the grant of the patent: **03.05.2017**
(21) Application number: 13196960.2
(22) Date of filing: 12.12.2013
(51) Int. Cl.: B65G 63/04, B65G 67/60

(54) **Loading and unloading system for containers at quayside**
Be- und Entladesystem für Behälter am Kai
Système de chargement et de déchargement pour contenants de bord de quai

(30) Priority: 14.12.2012 WO PCT/SG2012/000476
(43) Date of publication of application: 18.06.2014
(73) Proprietor: CDA Projects Pte Ltd Co., 300001 Singapore (SG); Ong, Lin Khim, 807104 Singapore (SG)
(72) Inventor: Ong, Lin Khim, 807104 Singapore (SG)
(74) Representative: Murnane, Graham John

(56) References cited:
- EP-A1- 1 612 165
- WO-A1-2006/104329
- WO-A1-2006/123848
- WO-A2-2004/083097
- DE-A1- 19 803 322
- JP-A- 2005 319 903
- US-A1- 2008 264 889
- Anonymous: "Port Strategy - APM test bed for quad technology", , 30 January 2008 (2008-01-30), XP055104709, portstrategy.com Retrieved from the Internet: URL:http://www.portstrategy.com/news101/pr oducts-and-services/apm_test_bed_for_quad_ technology [retrieved on 2014-02-27]

## Description

### FIELD OF INVENTION

The invention generally relates to loading and unloading system for containers at quayside according to the preamble of claim 1 and to a corresponding method of loading and unloading containers from a container ship according to the preamble of claim 7.

### BACKGROUND OF INVENTION

A container crane or container handling gantry crane or ship-to-shore crane is found at container port or pier for loading and unloading from container ships. Basically, container cranes consist of a supporting framework that can traverse the length of a quayside , and a moving platform which is known as spreader.

The spreader can be lowered down from the crane onto the top of a container and locks onto the container's four locking points by using twistlock mechanism. Cranes normally transport a single container at once, however some newer cranes have the capability to pick up two to four containers at once.

It is an urgent need for high efficiency loading and unloading system for containers onto/from container ship at quayside in order to meet the demand of productivity needed for large container ships. This is due to the increasing requirements of container transportation in the world and the continuous increment of the handling capacity of the container port. In existing loading and unloading system where indented berth is currently being used, loading and unloading cranes occupy the opposite sides of the container ship but are positioned in an alternative space. This system allows only loading and unloading at one side on one crane space.

In some container ports in the world, crane automation system is used to control the container crane for transporting containers between the container ships and a repository location in a container storage area of the container terminal. During loading and unloading of container ships, the crane operator or the automation system of the container crane must be informed about the container to be loaded or unloaded. Another approach involves the deck crew on the container ship to radio the desired sequence to the crane operator. Not only increases this approach the need for personnel but the unloading and loading operations of a container ship become very time-consuming. In either case, the error rate during loading and unloading is comparably high.

US Patent No. 4160617 discloses apparatus for conveying containers between a vessel crane for loading and unloading containers of at least a first or a second predetermined length from a vessel and the yard classification equipment for distributing containers to and from a container handling yard, the apparatus comprising: a pair of elongate support members extending along a single file conveyance path including a first work station underlying said vessel loading crane, a second work station at the remote end of said support member and an intermediate support for the support of at least one container between said work stations; vehicle means underlying the support members and any containers resting thereon for running reversibly along said support members between the work stations, the vehicle means including lifting means for raising said containers from a support position on said support members; and means for moving the vehicle means between said work stations along said single file conveyance path for the movement of said containers on said path over said support members, including first circuit means for determining movement on said path as a function of the length of the container being conveyed.

US Patent No. 6931314 discloses a method of automating the loading and unloading of a container ship in a container terminal, comprising the steps of: transmitting a stowage plan of a ship cargo compartment, which is to be handled by a container crane, from a harbor-side master computer via a data link to a PC of a crane automation system which renders the container crane operative in response to the stowage plan for transporting containers between a container ship and a repository location in a container storage area of the container terminal; displaying the stowage plan on a touch screen of the crane automation system; indicating a next following repository location to be handled in the stowage plan on the touch screen; and displaying on the touch screen space coordinates of a next following repository location simultaneously with a display of the stowage plan of said next following repository location, with a desired target setting program executed on the PC.

EP 1 612 165 A1 discloses a loading and unloading system for containers according to the preamble of claim 1.

It would therefore be desirable and advantageous to provide a loading and unloading system for container at quayside and an improved method of loading and unloading of container ships in container ports, to obviate prior art shortcomings and to enable loading and unloading of containers.

To achieve this purpose, the present invention provides a loading and unloading system for containers at quayside according to claim 1 and a corresponding method of loading and unloading containers from a container ship according to claim 7. The dependent claims 2-6 define preferred embodiments of the invention.

### SUMMARY OF THE INVENTION

According to one aspect of the present invention, there is provided a loading and unloading system for containers at quayside which increases productivity of loading and unloading of containers from container ship by allowing loading and unloading on both sides of the container ship simultaneously and at two levels of transit structure.

An object of the present invention is to provide a loading and unloading system for containers at quayside, wherein a zone of overlapping for loading and unloading by two spreaders on one crane and the two spreaders on the same crane can reach any remaining containers that have yet to be unloaded by the other spreader.

Another object of the present invention is to provide a loading and unloading system for containers at quayside, wherein the crane is capable to load and unload containers to a 2-storey transit structure on the quayside, enabling a delivery system to quickly unload from the ship and load from the transit platform located immediately next to the container ship.

A further object of the present invention is to provide a loading and unloading for container at quayside which allows containers to be quickly loaded and unloaded without waiting for prime movers to carry them from the quayside which usually results in traffic congestion at the quayside.

Yet still a further object of the present invention is to provide a loading and unloading system for container at quayside, wherein the crane has four pairs of legs which is stable and efficient as the load is transferred to all the legs of the crane, and this simply supported system is structurally more stable and efficient and allow the cranes to be designed to carry more load as compared to a conventional quayside crane which is based on a cantilever system which require counterweight to prevent toppling effect of the container it is carrying.

Yet another further object of the present invention is to provide a loading and unloading system for containers at quayside, both legs on the first level and on the second level sit on the reinforced concrete structure of the loading and unloading platform.

Still another object of the present invention is to provide a loading and unloading system for containers at quayside, wherein the spreader on the crane can move laterally to allow in or sideway movement of the container to enable the containers to be placed into the structure.

A further object of the present invention is to provide a loading and unloading system for container at quayside, wherein the spreader on the crane moves laterally to allow for minor sideways movement of the container into the structure when the reinforced concrete columns may be in the way.

Yet a further object of the present invention is to provide a loading and unloading system for containers at quayside, wherein the middle section of the crane is supported independently on vertical columns so that it can be elevated to clear the height of the ship's bridge when the ship is moving in or out of the indented berth.

Yet still a further object of the present invention is to provide a loading and unloading system for containers at quayside, wherein the middle section of the crane can be lowered when the ship is berthed and secured for loading and unloading of containers from the ship.

The present invention also provides a method of loading and unloading containers from container ship with bi-level crane, which increases productivity of loading and unloading of containers from container ship.

The present method of loading and unloading container from container ship with crane occupied same number of crane space but the number of working cranes for loading and unloading are doubled.

The present invention resolves prior art problems by doubling number of working cranes for one crane space.

### BRIEF DESCRIPTION OF THE DRAWINGS

Other features and advantages of the present invention will be more readily apparent upon reading the following description of currently preferred exemplified embodiments of the invention with reference to the accompanying drawing, in which:
FIG. 1 is a perspective view of a loading and unloading system for containers at quayside constructed in accordance with one embodiment of the present invention;
FIG. 2 is a front elevation view of the system position between at quayside in accordance with the present invention, wherein the spreaders are positioned at the side f the container ship;
FIG. 3 is a top view showing quayside containership loading and unloading system for indented berth in accordance with the present invention;
FIG. 4 is a side elevation view showing the overlapping zone for clearance of containers by two spreaders in accordance with the present invention;
FIG. 5 shows the side elevation views of two levels of loading and unloading in accordance with the present invention;
FIG. 6 is a side view showing the rising of the mid-section of the crane in accordance with the present invention; and
FIG. 7 is a side view showing the lowering of the mid-section of the crane in accordance with the present invention.

### DETAILED DESCRIPTION OF THE DRAWINGS

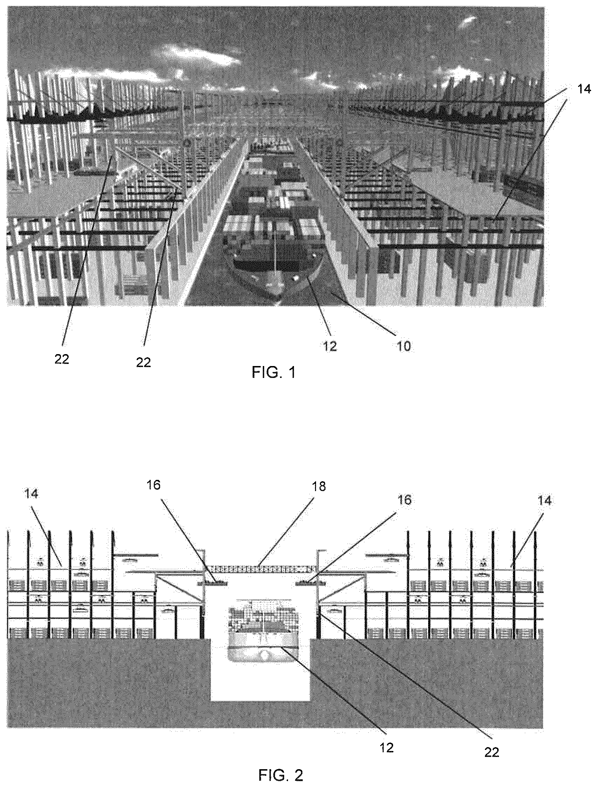

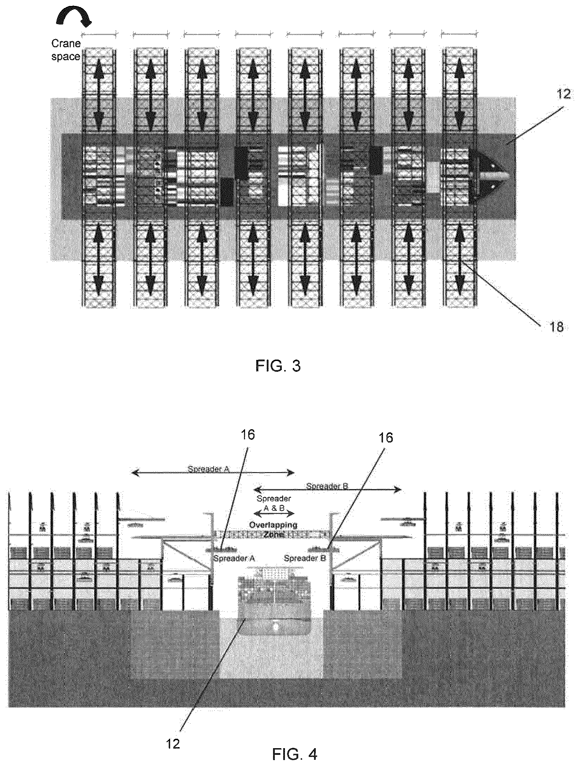

Referring initially to FIG. 1, there is seen a pier 10 at which a containership 12 is moored. The containership 12 is berthed at an indented berth. In the present preferred embodiment, there are two cranes 18 (FIG. 2) on one crane space. The loading and unloading system comprises (i) a two levels of transit structure 14 to hold containers for either loading or unloading; (ii) container cranes (FIG. 2) having a pair of lifting means or hoisting means each connected to a spreader 16 (FIG. 4) on each crane for the container crane for lifting containers from a containership 12. The operation of cranes 18 including the spreaders 16 is carried out via a plurality of motors and cables and with a plurality of braking means, allowing the upward and downward movement of the spreaders 16.

There are rails (not shown) mounted horizontally to the crane 18 such that the lifting means or the hoisting means is slidingly moveable horizontally along the rails. The loading and unloading system is provided with a plurality of leg supports 22 structurally mounted at both side of the indented berth (quayside) to support the container crane 18, wherein the lifting means is permitted to move along the rails, wherein the crane 18 operates loading and unloading simultaneously to unload containers from the containership 12 and store the loaded containers at the transit structure 14.

As shown in FIG. 2, the containership 12 is at an indented berth and the crane 18 is positioned above the containership 12. The quaysides of the indented berth are transit structure 14, which is a two levels structure. In accordance with the present invention, the present loading and unloading system allows two quaysides simultaneous loading and unloading on one crane space, as shown in FIG. 3, which shows quayside containership 12 loading and unloading system for indented berth. Thus, the system provides an effective and doubling the loading and unloading capacity on one crane space. Based on the present structure, for the same number of crane space occupied, the number of working cranes for loading and unloading are doubled. Thus, the efficiency of the unloading and loading of containers is highly improved.

FIG. 4 shows a side elevation view showing the overlapping zone for clearance of containers by two spreaders 16 in accordance with the present invention. There is a zone of overlapping for loading and unloading by both the spreader 16 and with a control sequencing and overlapping of the two pairs of spreader 16 on one crane 18, working on one row of containers on the containership 12, the loading and unloading of containers can be completed almost simultaneously by the two spreaders 16 on the same crane 18 as both spreaders 16 can reach any container on the containership 12 that have yet to be unloaded by the other spreader 16.

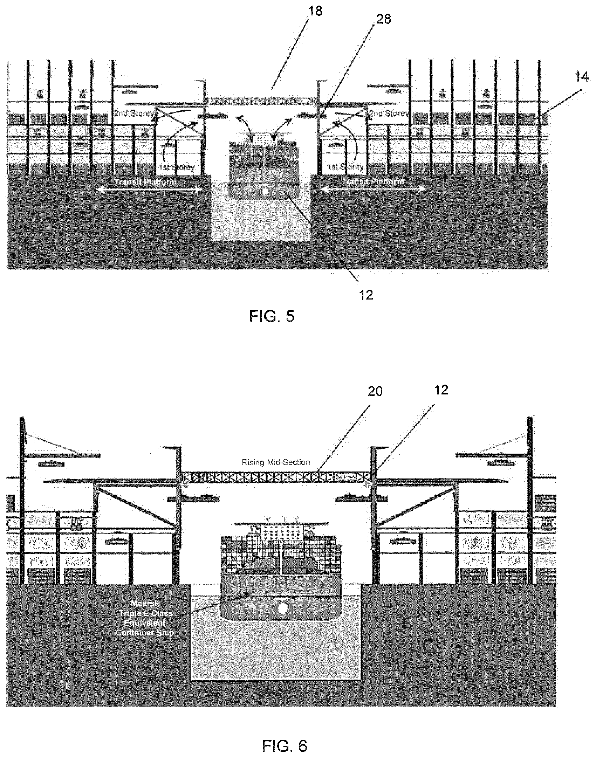

FIG. 5 shows the side elevation views of two levels of loading and unloading in accordance with the present invention. The crane 18 in accordance with the present invention is used to load and unload containers to a 2-storey transit structure on the quayside ash shown in FIG. 5. This forms a delivery system to quickly unload from a containership and/or load from the transit structure 14 located immediately next to the containership 12. The crane 18 together with the transit structure 14 allows for containers to be loaded and unloaded to two different levels, enabling containers to be loaded and unloaded quickly. In accordance with the present invention, the containers can be quickly loaded and unloaded without waiting for prime movers to carry them from the quayside which usually in traffic congestion at the quayside.

In accordance with the present invention, the crane 18 is provided with four pairs of legs 28 with simply supported structure which is structurally stable and efficient system as the load is transferred to all four legs as compared in the existing crane where most of the load is transferred to the front leg nearest to the seaside. The simply supported structure of the present invention eliminates the requirement of the counterweight and therefore reduces the overall deadweight of the crane enabling it to carry up to 8 FEUs (eight-foot equivalent units) at any one time compared to the conventional cranes.

In the present invention, in order to cater for an increase in height due to the height of the 2-storey loading and unloading platform and to facilitate movement of containers to the second storey, one leg of the structure is designed is such a way that it is shorter than the other. Both the legs on the first level and the second level are also designed to sit on the reinforced concrete structure of the loading and unloading platform. This reduces the height of the moving legs and thus the weight, resulting in a more efficient crane. According to the present invention, the spreader on the crane can move laterally to allow for minor sideways movement of the container to enable it to be placed into the structure when the reinforced concrete columns may be in the way.

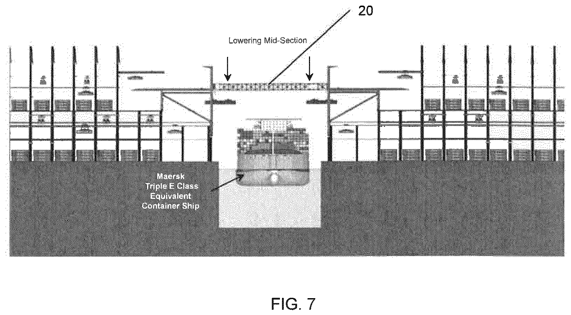

FIG. 6 is a side view showing the rising of the mid-section 20 of the crane 18 in accordance with the present invention. The middle section 20 of the crane 18 is supported independently on vertical columns such that any elevated height is possible for the clearance of the height of the ship's bridge moving into the indented berth. FIG. 7 is a side view showing the lowering of the mid-section of the crane 18 in accordance with the present invention. After the containership 12 is berthed and secured for loading and unloading of containers, the middle section 20 of the crane 18 is lowered to a normal position.

The present invention also relates to a method of loading and unloading containers from a container ship according to claim 7. The method comprises the steps of
(i) moving the lifting means over the containers on a container ship along the rails of the crane;
(ii) lowering the lifting means so that the spreader is directly above the containers to be unloading from the container ship;
(iii) grapping the containers either two at each of the lifting means concurrently and transporting the containers onto a transit structure for storage for two levels.

In the present invention, there are a plurality of trolleys (not shown) mounted to the lifting means or hoisting means to enable movement along the rail. The spreaders 16 are adapted for grasping and releasing containers of various sizes, and that the spreader can rotate 90 degrees and move laterally to enable the grasped containers to be placed onto the platform of the transit structure 14.

In accordance with the present invention, the containers on the containership ship 12 are unloaded to the transit structure 14 for storage.

While the invention has been illustrated and described in connection with currently preferred embodiments shown and described in detail, it is not intended to be limited to the details shown since various modifications and structural changes may be made without departing in any way from the scope of the claims.

## Claims

1. A loading and unloading system for containers at quayside comprising:
a) a two levels quayside transit structure (14) on shore to hold containers for either loading or unloading for a container ship (12) at an indented berth or a conventional linear berth;
b) a container crane (18) with a middle section (20) and two side sections, wherein the middle section (20) is supported on vertical columns, allowing any elevated height for ship clearance, having a pair of lifting means each connected to a spreader (16) for the container crane (18) for lifting containers from the container ship (12), a plurality of motors and cables and a plurality of braking means, allowing the upward and downward movement of the spreaders (16),
wherein the container crane (18) is capable of lifting containers to or from said transit structure (14); and able to load and unload to both sides of the indented berth to and from the two levels of the transit structure (14) simultaneously by one single crane (18) and within one cranespace;
c) rails mounted horizontally to the middle (20) and side sections of the container crane (18) such that the lifting means is slidingly moveable horizontally along the rails of the middle (20) and side sections of the crane (18) to operate the lifting of containers above the container ship (12) to the two different levels of said transit structure (14) on quayside; and
d) a plurality of leg supports (22) structurally mounted at both sides of the indented quayside to the ground or a supporting structure to support the container crane (18), wherein the container crane (18) comprises a total of four pairs of leg supports (22) which is structurally stable, wherein the lifting means is permitted to move along the rails, wherein the crane (18) operates loading and unloading simultaneously to unload containers from the container ship (12) and store the loaded containers at the quayside transit structure (14), wherein a plurality of loading and unloading systems are being operated simultaneously to increase the efficiency in loading and unloading of containers; **characterized in that**
the middle section (20) of the crane (18) is movably supported on the vertical columns independently of the two side sections so that it can be elevated and lowered when the container ship (12) is berthed and secured for loading and unloading of containers.

2. The loading and unloading system of Claim 1, wherein said rails are substantially elongated and are provided with a pair of opposed terminal ends.

3. The loading and unloading system for containers of Claim 1, wherein a plurality of trolleys are mounted to the lifting means to enable movement along the rails.

4. The loading and unloading system of Claim 1, wherein the spreaders (16) are adapted for grasping and releasing containers of various sizes.

5. The loading and unloading system for containers of Claim 1, wherein the containers are transferred from the container crane (18) to a transit structure (14) and vice versa directly over a selected platform for container storage of the transit structure (14).

6. The loading and unloading system of Claim 1, wherein the spreader (16) can rotate 90 degrees and move laterally to enable the grasped containers to be placed onto the platform of the storage level.

7. A method of loading and unloading containers from a container ship (12) using the loading and unloading system of claims 1 to 6 and comprising the steps of
(I) Observing the container ship (12) being berthed at an indented berth;
(II) moving the container crane (18) with the lifting means over the containers on a container ship (12) along rails of the crane (18);
(III) lowering the lifting means so that the spreader (16) is directly above the containers to be unloaded from the container ship (12);
(IV) grappling or grasping the containers either four or more at each of the lifting means concurrently and transporting the containers to both sides of an indented berth onto a transit structure (14) for storage on two levels.

## Patentansprüche

1. Ein Lade- und Entladesystem für Container an einem Kai, das Folgendes beinhaltet:
a) eine Zwei-Etagen-Kaitransitstruktur (14) an Land zum Lagern von Containern entweder zum Laden oder Entladen für ein Containerschiff (12) an einem eingebuchteten Liegeplatz oder einem herkömmlichen Liegeplatz für ein Linienschiff;
b) einen Containerkran (18) mit einem mittleren Abschnitt (20) und zwei Seitenabschnitten, wobei der mittlere Abschnitt (20) auf vertikalen Säulen gestützt wird, was jede beliebige angehobene Höhe für die Schiffdurchfahrtshöhe ermöglicht, mit einem Paar Hebemitteln, die jeweils mit einem Spreader (16) für den Containerkran (18) zum Heben von Containern von dem Containerschiff (12) verbunden sind, einer Vielzahl von Motoren und Kabeln und einer Vielzahl von Bremsmitteln, welche die Auf- und Abwärtsbewegung der Spreader (16) ermöglichen,
wobei der Containerkran (18) in der Lage ist, Container auf die Transitstruktur (14) oder von dieser weg zu heben; und mittels eines einzigen Krans (18) und innerhalb eines Kranplatzes gleichzeitig auf beiden Seiten des eingebuchteten Liegeplatzes auf die und von den zwei Etagen der Transitstruktur (14) laden und entladen kann;
c) Schienen, die horizontal an dem mittleren Abschnitt (20) und den Seitenabschnitten des Containerkrans (18) montiert sind, so dass die Hebemittel horizontal entlang den Schienen des mittleren Abschnitts (20) und der Seitenabschnitte des Krans (18) gleitend bewegbar sind, um das Heben der Container über das Containerschiff (12) auf die zwei unterschiedlichen Etagen der Transitstruktur (14) am Kai durchzuführen; und
d) eine Vielzahl von Fußstützen (22), die an beiden Seiten des eingebuchteten Kais am Boden oder an einer Stützstruktur strukturell montiert sind, um den Containerkran (18) zu stützen, wobei der Containerkran (18) insgesamt vier Paar Fußstützen (22) beinhaltet, die strukturell stabil sind, wobei sich die Hebemittel entlang den Schienen bewegen können, wobei der Kran (18) das Laden und Entladen gleichzeitig durchführt, um Container von dem Containerschiff (12) zu entladen und die geladenen Container an der Kaitransitstruktur (14) zu lagern, wobei eine Vielzahl von Lade- und Entladesystemen gleichzeitig betätigt wird, um die Effizienz des Ladens und Entladens von Containern zu steigern;
**dadurch gekennzeichnet, dass**
der mittlere Abschnitt (20) des Krans (18) unabhängig von den zwei Seitenabschnitten bewegbar auf den vertikalen Säulen gestützt wird, so dass er angehoben und gesenkt werden kann, wenn das Containerschiff (12) anliegt und zum Laden und Entladen von Containern gesichert ist.

2. Lade- und Entladesystem gemäß Anspruch 1, wobei die Schienen im Wesentlichen länglich sind und mit einem Paar entgegengesetzter Terminalenden versehen sind.

3. Lade- und Entladesystem für Container gemäß Anspruch 1, wobei eine Vielzahl von Laufkatzen an den Hebemitteln montiert sind, um die Bewegung entlang den Schienen zu ermöglichen.

4. Lade- und Entladesystem gemäß Anspruch 1, wobei die Spreader (16) zum Greifen und Loslassen von Containern verschiedener Größen angepasst sind.

5. Lade- und Entladesystem für Container gemäß Anspruch 1, wobei die Container direkt über einer ausgewählten Plattform zur Containerlagerung der Transitstruktur (14) von dem Containerkran (18) zu einer Transitstruktur (14) und umgekehrt transferiert werden.

6. Lade- und Entladesystem gemäß Anspruch 1, wobei sich der Spreader (16) um 90 Grad drehen und sich seitlich bewegen kann, um zu ermöglichen, dass die ergriffenen Container auf die Plattform der Lageretage platziert werden.

7. Ein Verfahren zum Laden und Entladen von Containern von einem Containerschiff (12) unter Verwendung des Lade- und Entladesystems gemäß den Ansprüchen 1 bis 6 und das die folgenden Schritte beinhaltet:
(I) Überwachen des Containerschiffs (12) während es an einem eingebuchteten Liegeplatz anliegt;
(II) Bewegen des Containerkrans (18) mit den Hebemitteln über die Container auf einem Containerschiff (12) entlang Schienen des Krans (18);
(III) Senken der Hebemittel, so dass sich der Spreader (16) direkt über den Containern befindet, die von dem Containerschiff (12) entladen werden sollen;
(IV) simultanes Fassen oder Greifen von vier oder mehr Containern an jedem der Hebemittel und Transportieren der Container auf beide Seiten eines eingebuchteten Liegeplatzes auf eine Transitstruktur (14) zur Lagerung auf zwei Etagen.

## Revendications

1. Un système de chargement et de déchargement pour conteneurs à quai comprenant :
a) une structure de transit portuaire à deux niveaux (14), à terre, pour la mise en attente de conteneurs soit au chargement, soit au déchargement pour un navire porte-conteneurs (12) à un poste à quai en renfoncement ou à un poste à quai pour paquebot traditionnel ;
b) une grue à conteneur (18) présentant une section de milieu (20) et deux sections latérales, dans lequel la section de milieu (20) est supportée sur des montants verticaux, permettant n'importe quelle hauteur de débattement en élévation pour le navire, possédant une paire de moyens de levage connectés chacun à un palonnier (« spreader ») (16) pour la grue à conteneur (18) pour le levage de conteneurs à partir du navire porte-conteneurs (12), une pluralité de moteurs et de câbles et une pluralité de moyens de freinage, permettant le déplacement vers le haut et vers le bas des palonniers (16),
dans lequel la grue à conteneur (18) est capable de lever des conteneurs pour les placer sur ou les enlever de ladite structure de transit (14) ; et à même de charger et de décharger vers les deux côtés du poste à quai en renfoncement, vers et depuis les deux niveaux de la structure de transit (14) simultanément à l'aide d'une seule grue (18) et au sein d'un seul espace de grue ;
c) des rails montés horizontalement sur les sections de milieu (20) et latérales de la grue à conteneur (18) de sorte que les moyens de levage soient à même d'être déplacés horizontalement par glissement le long des rails des sections de milieu (20) et latérales de la grue (18) afin de réaliser le levage de conteneurs au-dessus du navire porte-conteneurs (12) vers les deux niveaux différents de ladite structure de transit (14) à quai ; et
d) une pluralité de supports de pieds (22) installés structurellement au niveau des deux côtés du quai en renfoncement, et rattachés au sol ou à une structure de support pour supporter la grue à conteneur (18), dans lequel la grue à conteneur (18) comprend au total quatre paires de supports de pieds (22) qui sont structurellement stables, dans lequel les moyens de levage sont autorisés à se déplacer le long des rails, dans lequel la grue (18) réalise le chargement et le déchargement simultanément afin de décharger des conteneurs du navire porte-conteneurs (12) et d'entreposer les conteneurs chargés au niveau de la structure de transit portuaire (14), dans lequel une pluralité de systèmes de chargement et de déchargement sont mis en fonctionnement simultanément pour accroître l'efficacité du chargement et du déchargement de conteneurs ;
**caractérisé en ce que**
la section de milieu (20) de la grue (18) est supportée de façon mobile sur les montants verticaux indépendamment des deux sections latérales si bien qu'elle peut être élevée et abaissée lorsque le navire porte-conteneurs (12) est amarré à son poste et arrimé pour le chargement et le déchargement de conteneurs.

2. Le système de chargement et de déchargement de la revendication 1, dans lequel lesdits rails sont substantiellement allongés et sont munis d'une paire d'extrémités terminales opposées.

3. Le système de chargement et de déchargement pour conteneurs de la revendication 1, dans lequel une pluralité de chariots sont montés sur les moyens de levage afin qu'un déplacement soit possible le long des rails.

4. Le système de chargement et de déchargement de la revendication 1, dans lequel les palonniers (16) sont conçus pour agripper et relâcher des conteneurs de tailles diverses.

5. Le système de chargement et de déchargement pour conteneurs de la revendication 1, dans lequel les conteneurs sont transférés de la grue à conteneur (18) vers une structure de transit (14) et vice versa directement au-dessus d'une plate-forme choisie pour l'entreposage de conteneurs de la structure de transit (14).

6. Le système de chargement et de déchargement de la revendication 1, dans lequel le palonnier (16) peut effectuer une rotation de 90 degrés et se déplacer latéralement pour qu'il soit possible de placer les conteneurs agrippés sur la plate-forme du niveau d'entreposage.

7. Un procédé de chargement et de déchargement de conteneurs depuis un navire porte-conteneurs (12) à l'aide du système de chargement et de déchargement des revendications 1 à 6 et comprenant les étapes suivantes
(I) observation du navire porte-conteneurs (12) lors de son amarrage à un poste à quai en renfoncement ;
(II) déplacement de la grue à conteneur (18) possédant les moyens de levage au-dessus des conteneurs sur un navire porte-conteneurs (12) le long de rails de la grue (18) ;
(III) abaissement des moyens de levage de sorte que le palonnier (16) soit directement au-dessus des conteneurs devant être déchargés du navire porte-conteneurs (12) ;
(IV) saisie ou agrippement des conteneurs à raison de soit quatre, soit plus au niveau de chacun des moyens de levage en même temps et transport des conteneurs vers les deux côtés d'un poste à quai en renfoncement jusque sur une structure de transit (14) pour entreposage sur deux niveaux.
